# EUROPEAN PATENT SPECIFICATION

(11) **EP 4 468 225 B1**
(45) Date of publication and mention of the grant of the patent: **01.07.2026**
(21) Application number: 24177424.9
(22) Date of filing: 22.05.2024
(51) Int. Cl.: G06Q 20/32, G07F 15/00

(54) **A METHOD FOR OPERATING A CHARGING STATION, A METHOD OF OPERATING A SERVER FOR A CHARGING STATION, AND A CHARGING STATION DEVICE**
VERFAHREN ZUM BETRIEB EINER LADESTATION, VERFAHREN ZUM BETRIEB EINES SERVERS FÜR EINE LADESTATION UND LADESTATIONSVORRICHTUNG
PROCÉDÉ DE FONCTIONNEMENT D'UNE STATION DE CHARGE, PROCÉDÉ DE FONCTIONNEMENT D'UN SERVEUR POUR UNE STATION DE CHARGE ET DISPOSITIF DE STATION DE CHARGE

(30) Priority: 22.05.2023 NL 2034884
(43) Date of publication of application: 27.11.2024
(73) Proprietor: MoveYou B.V., 8802 PV Franeker (NL)
(72) Inventor: AKKERMAN, Jan Harmen, 8802 PV FRANEKER (NL)
(74) Representative: Arnold & Siedsma

(56) References cited:
- US-A1- 2014 149 293
- US-A1- 2015 302 390
- US-A1- 2018 105 051
- US-A1- 2020 006 969
- US-B2- 11 370 313

## Description

The present invention relates to a method for operating a charging station, a method of operating a server for a charging station, and a charging station device.

Charging stations are stations that can supply electrical power to charge vehicles that require such electrical power, for example plug-in hybrids, electric cars, electric trucks, or electric buses. Charging stations comprise a connector to which a charging cable of the vehicle can be connected. Public charging stations, i.e. charging stations that are not in private ownership but in ownership of public charging companies and that can be used by different users, further require a system to pay for the electrical power, or at least a system that can register which user is charging.

A known system to register which user is charging are charging passes. The charging pass can be a card that is provided with a Near Field Communication (NFC) chip. The NFC chip may have a personal identification number, such as a 20-digit code. The personal identification number may be linked to a charging pass company. The charging companies may provide valid personal identification number to the public charging companies, which valid personal identification numbers are put on a whitelist. When a charging pass is used at a public charging station, the charging station checks if the personal identification number is present on the whitelist. If this is the case, the charging station can be set to provide electrical power to the vehicle connected to the connector. The charging pass company can then charge the user for the used electrical power.

However, due to European Union regulations it will become mandatory that ad-hoc payments are possible at charging stations. Ad-hoc payments are payments that do not require any contract, for example with a charging pass company. One solution for an ad-hoc payment is a scannable code that is provided on the charging station. The scannable code can bring the user to a portal, for example a website, where the user can insert its payment details or pay the electrical power.

A disadvantage of the scannable code is that the scannable code can easily be replaced by scammers to a different scannable code. This different scannable code then leads to a portal of the scammers. If users provide their payments details or pay there, they lose their money and still cannot charge their electric vehicle.

US 2020/006969 A1 relates to a method which includes receiving, at a server, a request from a device to find one or more charge units for charging an electric vehicle at a geographic location. The method includes accessing, by the server, a first database to identify charge units that are associated with the geographic location. The method includes accessing, by the server, a second database to identify discounts available at the charge units identified to be associated with the geographic location. One of the identified discounts on one of the charge units is provided by a first merchant having a business location proximate to the one of the charge units. The method includes sending, by the server, data to the device that identifies one or more of the charge units that are associated with the geographic location, the data further including information regarding one or more discounts identified to be available at one or more of the identified charge units.

US 2015/302390 A1 relates to a method and system for providing financial details from a mobile device of a user for use in a transaction. The method is performed on a mobile device of the user and includes the steps of generating, on a token generating component, a session-specific token by applying an algorithm requiring a dynamic key; providing financial details for use in a transaction; incorporating the session-specific token and the financial details into a modified form the financial details; and transferring the modified form of the financial details from the mobile device to initiate the transaction. A corresponding method and system for validating financial details received, at a server of an issuing authority, is also provided.

It is an object for the present invention to improve or at least reduce the abovementioned problems. In particular, it is an object of the present invention to provide a method that prevents fraudulent activities on charging stations.

This object is achieved by a method for operating a charging station, comprising:
- providing a dynamic code;
- displaying the dynamic code on a screen of the charging station, wherein the dynamic code is associated with charging station information relating to the charging station;
- receiving a time-based token request from an electronic device, wherein the time-based token request is generated by a confirmation of a user on the electronic device after being shown the charging station information;
- generating a time-based token based on the time-based token request;
- displaying the time-based token on the screen of the charging station;
- comparing a token confirmation request with the time-based token; and
- displaying, when the token confirmation request is identical to the time-based token, a confirmation message on the screen of the charging station.

An advantage of the method according to the invention is that by comparing the token confirmation request with the time-based token and displaying a confirmation message, the user receives a confirmation that the dynamic code the user has scanned is inextricably linked with the charging station itself. This prevents that scammers can put fraudulent codes on the charging station in order to steal money from the users of the charging station. This improves the security of the charging station.

**The dynamic** code may be scanned by the user such that the user receives the charging station information on its electronic device. The scanning of the dynamic code may direct the electronic device to a website whereon the charging station information is displayed, or a mobile application wherein the charging station information is displayed.

The token confirmation request may be input by the user. The token confirmation request may be input on an electronic device of the user. For example, the token confirmation request may be input in an online portal or in a mobile application.

The token confirmation request may be a sequence of letters, a sequence of numbers, a sequence of number special characters (@, !. %, #, etc.), and/or a sequence of a combination of letters, numbers, and special characters. The time-based token may be a sequence of letters, a sequence of number, a sequence of number special characters (@, !, %, #, etc.), and/or a sequence of a combination of letters, numbers, and special characters.

The electronic device may be a mobile device. For example, the mobile device may be a mobile phone or a tablet. The electronic device may belong to a user.

The generation of the time-based token may be executed by providing a time-based token.

The steps of providing a dynamic code, receiving the dynamic code, generating a time-based token, and comparing a token confirmation request preferably is performed using a processor, wherein the steps may be performed or executed by (a processor of) the charging station and/or a remote server. The charging station and the remote server may be operatively connected to each other, such that communication between the charging station and the remote server is possible. In this way, the dynamic codes, the time-based token and/or the time-based token request can be exchanged between the charging station and the server.

Optionally, the time-based token that is generated based on the time-based token request is generated based on the location. In an embodiment, the time-based token is generated based on the time and the location of the charging station.

A server may receive the time-based token request. The time-based token request may contain information from the dynamic code that is scanned. The server may be able to extract information from the time-based token request. The server may determine based on the information to which charging station the time-based token request is associated. In other words, the server may determine based on the time-based token request the location of the charging station. The server may determine that the time-based token request is trustworthy, for example based on the time and location extracted from the information contained in the time-based token request.

In an embodiment providing a dynamic code comprises providing a first dynamic code at a first time, and changing the first dynamic code to a second dynamic code after a predetermined time duration after the first time.

By changing the dynamic code from a first to a second dynamic code, any fraudulent activity is further prevented. In particular, due to the changing nature of the dynamic code, any fraudulent codes also need to be of changing nature. This raises the threshold for scammers.

The predetermined time duration may be a fixed time duration. The predetermined time duration may be a changing time duration. The time the second dynamic code is provided may be a second time. The second dynamic code may be changed to a third dynamic code after the predetermined time duration. In fact, the first dynamic code may be followed by a plurality of subsequent dynamic codes, wherein each of the plurality of subsequent dynamic codes is provided for a predetermined time period. The predetermined time period may be a constant time period or may be a variable, non-constant time period.

An advantage of providing a dynamic code for a predetermined time period before changing the dynamic code to a second or subsequent dynamic code is that the dynamic code may be used to verify the time-based token request, because the time basis for the time-based token request generally is similar to a specific time period in which the (relevant) dynamic code is displayed.

In an embodiment the predetermined time duration is in the range of 1-120 minutes, preferably in the range of 2-30 minutes, more preferably in the range of 3-10 minutes, most preferably in the range of 4-5 minutes.

Experiments have shown that the abovementioned time durations effectively prevent fraudulent behaviour at the charging stations.

In an embodiment the providing of the time-based token comprises selecting a dynamic code of a pre-generated list of dynamic codes.

The pre-generation of the dynamics codes which can be put into a list, removes the need of an internet connection to provide the dynamic codes. This removes the need for a 2G-processor, 3G-processor and/or 4G-processor being provided in the charging station. This decreases the cost of the manufacturing of the charging pole. Alternatively or additionally, this decreases the energy consumption of the charging station.

In an embodiment each of the dynamic codes of the pre-generated list of dynamic codes is associated with a time period, and further comprising:
- determining the present time;
- determining a time period which comprises the present time as the determined time period; and
- selecting the dynamic code that is associated with the determined time period.

By selecting the dynamic code associated with the determined time period the dynamic code can effectively be selected from the pre-generated list. The pre-generated list can also be provided on the server which is configured to communicate with the electronic device of the user. As the clock of the server and the electronic device are set to run simultaneously, both the server and the charging station can be set to the same, identical, dynamic code that corresponds to a specific time. The time period can also be denoted as a time frame.

In an embodiment each of the dynamic codes is associated with an associated time-based token, wherein generating a time-based token based on the time-based token request comprises selecting the associated time-based token associated with the selected dynamic code.

An advantage of the time-based token being associated with a specific dynamic code is that the pre-generated list of dynamic code may also comprise the pre-generated time-based tokens. This removes the need of an internet connection to provide the time-based tokens. This removes the need for a 2G/3G/4G-processor being provided in the charging station. This decreases the cost of the manufacturing of the charging pole. Alternatively or additionally, this decreases the energy consumption of the charging station.

Preferably, the pre-generated list of dynamic codes and time-based tokens is provided on a processor of the screen of the charging station. This provides the possibility of an autonomous screen which can be attached to any charging station in order to provide the ad-hoc payment. This increases the versatility of the method. Alternatively, or additionally, any charging station can in this way provide ad-hoc payment with reduced costs.

Furthermore, the generating of the time-based token can effectively be realized by selecting the time-based token that is associated with the selected dynamic code. This saves data consumption and energy.

In an embodiment the steps of receiving, determining, determining and selecting are executed on a processor of an Electronic Shelf Label (ESL).

As the steps of receiving, determining and selecting are executed on the ESL, the ESL can be an independent device that ensures the security of the payment of the charging station. Alternatively or additionally, any existing charging station can, by adding an ESL, be transformed into a charging station that provides secure ad-hoc payments.

In an embodiment the ESL forms the screen.

An advantage of the ESL is that the energy consumption of the ESL is low. This increases the durability of the charging station.

In an embodiment the dynamic code is a QR-code.

The QR-code can effectively be scanned by any electronic device. This provides the ability of any user to make ad-hoc payments at the charging station.

In an embodiment of the method according of the invention, the screen or the ESL comprises a real-time clock (RTC), wherein the RTC preferably is configured to provide a real-time clock for at least one time zone and/or preferably is configured to correct time display for daylight saving time.

An advantage of providing an ESL having an RTC is that the time-based code can be adapted to a specific time zone and/or the presence of daylight saving time settings. As a result, the method can easily be applied at various different locations around the world.

In an embodiment of the method according of the invention, the method comprises the step of, prior to showing the dynamic code, showing a picture and/or a message on the display to indicate the charging station is operational, and preferably wherein the picture is an animation with an accompanying instructions to the user to check the animation prior to using the charging station, and more preferably wherein the animation comprises user instructions.

An advantage of providing a picture and/or message is that a user can immediately discern that the charging station is operational or not. This decreases the risk of fraud, since the user can immediately discern non-operational charging stations.

Another advantage is that the picture, message, and preferably an animation, can be used to provide instructions to the user on the use of the charging station.

In an embodiment the method further comprises setting the charging station in operation based on a payment confirmation.

The payment confirmation is preferably sent by a server which is communicatively coupled to the electronic device of the user. When the user has executed the ad-hoc payment, the server may send a payment confirmation to the charging station. The charging station may then set itself in operation based on the payment confirmation. The payment confirmation may be received by a processor of the charging station. The processor of the charging station may set the charging connection that is provided on the charging station to an open state. In the open state of the charging connection the charging connection provides electrical power when a charging cable is attached to the charging connection.

In an embodiment the providing of the time-based token comprises:
- receiving a token request from a charging station;
- generating the time-based token based on the token request; and
- sending the time-based token to the charging station.

In an embodiment of the method according of the invention, the method further comprises:
- setting the charging station in operation based on the confirmation; and/or
- ending the charging session.

A charging session at the charging station preferably is started at the confirmation. This may also include receiving payment information. The method also includes ending the charging session at the charging station.

In an embodiment of the method according of the invention, the step of setting the charging station in operation based on the confirmation comprises the step of storing unique identification information of the electronic device, and wherein the step of ending the charging session comprises the steps of:
- providing a further dynamic code;
- displaying the further dynamic code on the screen of the charging station, wherein the dynamic code is associated with charging station information relating to the charging station; and
- receiving an end session request from the electronic device, wherein the end session request is generated by a confirmation of a user on their electronic device after being shown the charging station information preferably including charging information;
- comparing the unique identification information of the electronic device that sent the end session request with the stored unique identification information of the electronic device;
- if the unique identification information of the electronic device and the stored unique identification information of the electronic device are identical, ending the charging session based on the end session request; and
- displaying a confirmation message on the screen of the charging station.

An advantage of the abovementioned embodiment is that the user may end the session based on a confirmation with the same electronic device that was used to start the session. To that end, unique identification information of the electronic device is stored so that an end session request made using the same electronic device automatically end the charging session.

In an embodiment of the method according of the invention, wherein the confirmation message comprises an end session token that is displayed on the screen and that is stored in a memory as stored end session token, and wherein the step of ending the charging session comprises the steps of:
- providing a further dynamic code;
- displaying the further dynamic code on the screen of the charging station, wherein the dynamic code is associated with the charging session at the charging station;
- receiving an end session request from the electronic device, wherein the end session request is generated by a confirmation of a user including the end session token on their electronic device after being shown the charging station information;
- comparing the end session token from the end session request with the stored end session token; and
- displaying, when the end session token from the end session request is identical to the stored end session token, a confirmation message on the screen of the charging station that the charging session is ended.

An advantage of the abovementioned embodiment is that the charging session may be ended with any electronic device rather than only with the electronic device that was used to start the session. This is possible by providing an end session token that can be used to end the present charging session.

The invention further relates to a method of operating a server for a charging station, comprising:
- providing a dynamic code;
- sending the dynamic code to the charging station, wherein the dynamic code is associated with charging station information relating to the charging station and is displayed on a screen of the charging station;
- receiving a charging station information request from an electronic device;
- sending the charging station information to the electronic device based on the charging station information request;
- receiving a time-based token request from the electronic device;
- providing a time-based token to the charging station based on the time-based token request that is to be displayed on the screen of the charging station;
- receiving a token confirmation request from the electronic device;
- comparing the token confirmation request with the time-based token;
- sending, when the token confirmation request is identical to the time-based token, a confirmation signal to the charging station.

The method of operating the server for the charging station has similar effects and advantages as described for the method for operating the charging station.

Any of the embodiments disclosed for the method for operating the charging station can also be applied to the method for operating the server for the charging station. For example, the dynamic code that selects a dynamic code of a pre-generated list of dynamic codes can also be executed on the server. In particular, the steps of:
- determining the present time;
- determining the time period which comprises the present time as the determined time period; and
- selecting the dynamic code that is associated with the determined time period,
can also be executed on the server. The same applies to any of the other embodiments of the method for operating the charging station.

The invention further relates to a method, comprising:
- providing a dynamic code;
- displaying a dynamic code on a screen of the charging station, wherein the dynamic code is associated with charging station information relating to the charging station;
- scanning the dynamic code with an electronic device;
- displaying the charging station information on the electronic device;
- receiving a time-based token request from the electronic device;
- providing a time-based token to the charging station based on the time-based token request;
- displaying the time-based token on the screen of the charging station;
- receiving a token confirmation request at the server from the electronic device;
- comparing the token confirmation request with the time-based token;
- displaying, when the token confirmation request is identical to the time-based token, a confirmation message on the screen of the charging station;
- receiving a payment confirmation at the charging station; and
- setting the charging station in operation based on the payment confirmation.

Any of the embodiments disclosed for the method for operating the charging station can also be applied to the above method.

The invention further relates to a charging station device, comprising:
- a screen;
- a processor operatively coupled to the screen, wherein the processor is configured to:
   - output a dynamic code, wherein the dynamic code is associated with charging station information relating to the charging station; and
   - receive a time-based token request from the electronic device, wherein the time-based token request is generated by a confirmation of a user on their electronic device after being shown the charging station information;
   - generating a time-based token based on the time-based token request;
   - displaying the time-based token on the screen of the charging station;
   - receiving a token confirmation request;
   - comparing the token confirmation request with the time-based token; and
   - displaying, when the token confirmation request is identical to the time-based token, a confirmation message on the screen of the charging station.

The charging station device has similar effects and advantages as described for the method for operating the charging station.

In an embodiment according to the invention the screen comprises an Electronic Shelf Label (ESL).

An advantage of the ESL is that the energy consumption of the ESL is low. This increases the durability of the charging station.

In an embodiment according to the invention outputting the dynamic code comprises outputting a first dynamic code at a first time, and changing the first dynamic code to a second dynamic code after a predetermined time duration after the first time.

By changing the dynamic code from a first to a second dynamic code, any fraudulent activity is further prevented. In particular, due to the changing nature of the dynamic code, any fraudulent codes also need to be of changing nature. This raises the threshold for scammers.

The predetermined time duration may be a fixed time duration. The predetermined time duration may be a changing time duration. The time the second dynamic code is provided may be a second time. The second dynamic code may be changed to a third dynamic code after the predetermined time duration.

In an embodiment according to the invention the predetermined time duration is in the range of 1-120 minutes, preferably in the range of 2-30 minutes, more preferably in the range of 3-10 minutes, most preferably in the range of 4-5 minutes.

Experiments have shown that the abovementioned time durations effectively prevent fraudulent behaviour at the charging stations.

In an embodiment according to the invention the generation of the time-based token comprises:
- selecting a dynamic code of a pre-generated list of dynamic codes.

The pre-generation of the dynamics codes which can be put into a list, removes the need of an internet connection to provide the dynamic codes. This removes the need for a 2G-processor, 3G-processor and/or 4G-processor being provided in the charging station. This decreases the cost of the manufacturing of the charging pole. Alternatively or additionally, this decreases the energy consumption of the charging station.

In an embodiment according to the invention each of the dynamic codes of the pre-generated list of dynamic codes is associated with a time period, and further comprising:
- determining the present time;
- determining the time period which comprises the present time as the determined time period; and
- selecting the dynamic code that is associated with the determined time period.

By selecting the dynamic code associated with the determined time period the dynamic code can effectively be selected from the pre-generated list. The pre-generated list can also be provided on the server which is configured to communicate with the electronic device of the user. As the clock of the server and the electronic device are set to run simultaneously, both the server and the charging station can be set to the same, identical, dynamic code that corresponds to a specific time. The time period can also be denoted as a time frame.

In an embodiment according to the invention each of the dynamic codes is associated with an associated time-based token, wherein generating a time-based token based on the time-based token request comprises selecting a time-based token that is associated with the selected dynamic code.

An advantage of the time-based token being associated with a specific dynamic code is that the pre-generated list of dynamic code may also comprise the pre-generated time-based tokens. This removes the need of an internet connection to provide the time-based tokens. This removes the need for a 2G/3G/4G-processor being provided in the charging station. This decreases the cost of the manufacturing of the charging pole. Alternatively or additionally, this decreases the energy consumption of the charging station.

In an embodiment according to the invention the steps of receiving, determining, determining and selecting are executed on a processor of the Electronic Shelf Label (ESL).

In an embodiment according to the invention the dynamic code is a QR-code.

The QR-code can effectively be scanned by any electronic device. This provides the ability of any user to make ad-hoc payments at the charging station.

In an embodiment according to the invention the controller is configured to set the charging station in operation based on a payment confirmation.

The payment confirmation is preferably sent by a server which is in communicative coupling with the electronic device of the user. When the user has executed the ad-hoc payment, the server may send a payment confirmation to the charging station. The charging station may then set itself in operation based on the payment confirmation. The payment confirmation may be received by a processor of the charging station. The processor of the charging station may set the charging connection that is provided on the charging station to an open state. In the open state of the charging connection the charging connection provides electrical power when a charging cable is attached to the charging connection.

Further advantages, features and details are elucidated based on preferred embodiments thereof, wherein reference is made to the accompanying drawings, wherein:

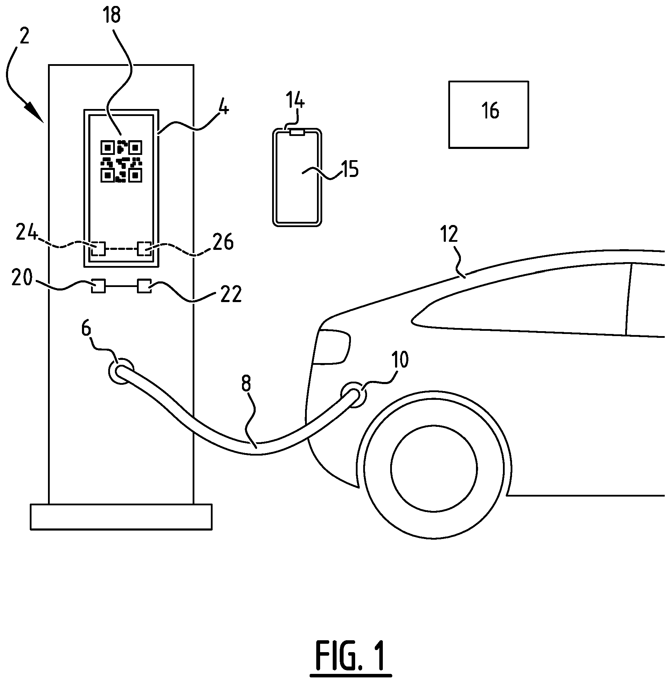

- figure 1, a schematic representation of a charging station with a vehicle;
- figure 2, a schematic illustration of a method;
- figure 3, a schematic representation of the time periods; and
- figure 4, a schematic illustration of a method.

Charging station 2 comprises housing 3 wherein screen 4 is provided. Charging station 2 further is provided with charging station connection 6. At charging station connection 6 charging cable 8 is connected with first end 9. Second end 11 of charging cable 8 is connected to car charging connection 10 of car 12. In this illustrated embodiment screen 4 is an electronic shelf label (ESL). Shown on screen 4 is dynamic code 18, in this example embodied as a QR code. Charging station 2 can be communicatively coupled to server 16. Server 16 may be provided at a location remote from charging station 2. Server 16 may be communicatively coupled to electronic device **14,** in this embodiment illustrated as a mobile phone. The connection between charging station 2 and server 16 and server 16 and electronic device **14** may be via a mobile communication network, such as a 2G, 3G, 4G, or 5G-connection.

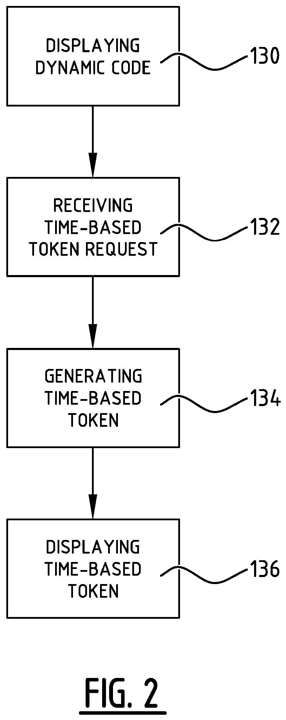

Dynamic code 18 can be provided by processor 20 of charging station 2. Alternatively, dynamic code 18 is provided by server 16. Dynamic code 18 may be any suitable code that is readable by a camera. This may be a barcode or a QR code. Dynamic code 18 can be scanned by the camera of electronic device 14. Dynamic code 18 is displayed on screen 4 of charging station 2 in step 130 (figure 2). Dynamic code 18 is associated with charging station information. Charging station information may be a location, a price of the electrical power, and/or a charging station company name. When electronic device **14** scans dynamic code 18, charging station information may be displayed on screen 15 of electronic device **14.** The charging station information may be encoded in dynamic code 18 itself.

Charging station information may also be associated with dynamic code 18 by being linked on server 16. When electronic device **14** scans dynamic code 18, electronic device **14** may send dynamic code 18 to server 16. Server 16 then selects the charging station information that is associated with dynamic code 18 that is sent by electronic device 14. Server 16 then sends the charging station information to electronic device 14.

When a user of electronic device **14** agrees with the charging station information, the user may confirm on electronic device **14** that he or she wants to use charging station 2. The confirmation may be embodied as a user executing a command on electronic device 14. The command may be any suitable command, such as pushing a button of electronic device **14,** clicking on a virtual button that is displayed on display 15 of electronic device **14,** or a speech command.

The command may be interpreted as a time-based token request in step 132. Charging station 2 receives the time-based token request. The time-based token request may be received by charging station 2 from server 16. Server 16 receives the time-based token request form electronic device 14.

Based on the time-based token request. a time-based token is provided. The time-based token may be any combination of numbers, letters and/or other symbols. The time-based token may be generated by server 16 in step 134. The time-based token may also be selected by server 16 from a list of pre-generated time-based tokens. Server 16 provides the time-based token to charging station 2. Charging station 2 may display the time-based token on screen 4 in step 136.

Alternatively or additionally, processor 20 of charging station 2 is operatively coupled to memory 22. Memory 22 stores a list of time-based tokens. Processor 20 may select time-based token from the list of time-based tokens that is stored in memory 22. Processor 20 may be configured to display the selected time-based token display on screen 4 of charging station 2. Alternatively or additionally, processor 24 of screen 4 is configured to select a time-based token from a list of time-based tokens that is stored in memory 26 of screen 4.

After the time-based token request, electronic device 14 is configured to display a field wherein the user can insert a token confirmation request. Any input into the field is token confirmation request. The token confirmation request may be sent from electronic device 14 to server 16. Server 16 may send the token confirmation request to charging station 2. Alternatively, electronic device 14 sends the token confirmation request directly to processor 20 of charging station 2.

Server 16 may compare the token confirmation request with the time-based token that was provided to charging station 2. Server 16 may compare the time-based token request with the time-based token that was sent to charging station 2. Upon determining that the token confirmation request is different than the time-based token, the server 16 may send disapproval signal to charging station 2. Server 16 may also send the disapproval signal to electronic device 14. Electronic device 14 may display an error message based on the disapproval signal.

When server 16 determines that the token formation request is identical to the time-based token, server 16 may send a confirmation signal to charging station 2. Processor 20 of charging station 2 can put a confirmation message on screen 4 based on receiving the confirmation signal.

When the token confirmation request is identical to time-based token, server 16 may send a payment signal to electronic device 14. The payment signal indicates that electronic device 14 may initiate payment for charging station 2. Electronic device 14 may make use of any suitable payment service for paying charging station 2s. Examples suitable payment services are credit cards, iDeal, and/or PayPal. After the user paid through electronic device 14, server 16 sends a payment confirmation to charging station 2. Alternatively, electronic device 14 sends a payment confirmation directly to charging station 2. Processor 20 of charging station 2 may set this charging station to an operation. Charging connection 6 is set to an open state such that electrical power can be provided through electrical cable 8 towards car charging connection 10 of car 12.

In an embodiment screen 4 of charging station 2 comprises processor 24 and memory 26. Processor 24 comprises an internal clock. Processor 24 is synced with the external clock present in server 16. The external clock in server 16 may be configured on a processor of server 16. Memory 26 comprises a list of time-based tokens. Each time-based token is associated with a specific timeframe. Processor 26 may further comprise a list of dynamic codes. Each dynamic code is associated with a specific timeframe. The time frames of time-based tokens the dynamic code are preferably identical. This means that each timeframe is associated with a specific time-based token and a specific dynamic code. Each time-based token is then associated with a specific dynamic code.

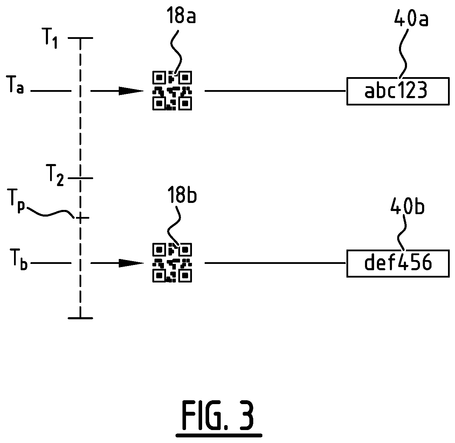

For example, two time frames Tₐ and T_{b} are shown in figure 3. Time frame Tₐ starts at time T₁ and time frame T_{b} starts at time T₂. Time frame Tₐ is associated with dynamic code 18a and time-based token 40a. Time frame T_{b} is associated with dynamic code 18b and time-based token 40b. Dynamic code 18a is provided from time T₁, and dynamic code 18b is provided from time T₂. Thus, dynamic code 18a is provided in timeframe T₁ and dynamic code 18b is provided in timeframe 18b.

Processor 26 may determine at a moment the present time Tₚ. The present time Tₚ falls in time frame T_{b}. Processor 26 selects dynamic code 14b to be shown in screen 4. Upon receiving a time-based token request, processor 26 selects time-based token 40b, as time-based token 40b is linked with dynamic code 18b and/or time frame T_{b}. Processor 26 then shows time-based token 40b on screen 4 of charging station 2.

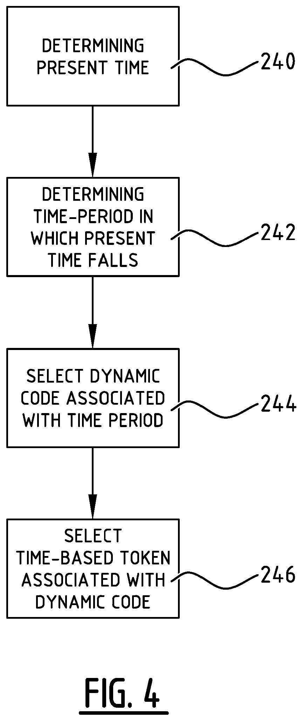

Processor 24 of screen 4 for may example receive a time-based token request from processor 20 of charging station 2. Upon receiving the time-based token request processor 24 may in step 240 (figure 4) determine the present time off the internal clock. In step 242 processor 24 determines in which time frame that present time falls. After determining the time frame, processor 24 in step 244 selects the dynamic code that is associated with the time frame. The dynamic code may be selected from a list of pre-generated dynamic codes stored in memory 26. The pre-generated list may also comprise pre-generated time-based tokens associated with the pre-generated dynamic codes. The dynamic code that is selected is displayed on screen 4 of charging station 2. After receiving the time-based token request, processor 24 selects the time-based token that is associated with the selected dynamic code in step 246. Alternatively or additionally, processor 24 selects the time-based token that is associated with the specific timeframe. The time-based token is displayed on screen 4 of charging station 2.

The present invention is by no means limited to the above-described preferred embodiments thereof. The rights sought are defined by the following claims within the scope of which many modifications can be envisaged.

## Claims

1. Method for operating a charging station, comprising:
- providing, by a processor of the charging station or a processor of a server, a dynamic code;
- displaying, by the processor of the charging station, the dynamic code on a screen of the charging station, wherein the dynamic code is associated with charging station information relating to the charging station;
- receiving, by the processor of the charging station or the processor of the server, a time-based token request from an electronic device, wherein the time-based token request contains information from the dynamic code, wherein the time-based token request is generated by a confirmation of a user on the electronic device after being shown the charging station information;
- generating, by the processor of the charging station or the processor of the server, a time-based token based on the time-based token request;
- displaying the time-based token on the screen of the charging station; -inputting a token confirmation request by a user on the electronic device, wherein the token confirmation request and the time-based token comprises at least one of a sequence of letters, a sequence of numbers, a sequence of number special characters and a sequence of a combination of letters, numbers and special characters;
- sending by the electronic device to the charging station or the server the token confirmation request;
- comparing, by the processor of the charging station or the processor of the server, the token confirmation request with the time-based token; and
- displaying, when the token confirmation request is identical to the time-based token, a confirmation message on the screen of the charging station.

2. Method according to claim 1, wherein providing the dynamic code comprises providing a first dynamic code at a first time (T1), and changing the first dynamic code to a second dynamic code after a predetermined time duration after the first time (T1); and preferably wherein the predetermined time duration is in the range of 1-120 minutes, preferably in the range of 2-30 minutes, more preferably in the range of 3-10 minutes, most preferably in the range of 4-5 minutes.

3. Method according to any one of the foregoing claims, wherein the generating of the time-based token comprises selecting a dynamic code of a pre-generated list of dynamic codes.

4. Method according to claim 3, wherein each of the dynamic codes of the pre-generated list of dynamic codes is associated with a time period, and further comprising:
- determining the present time (Tp);
- determining the time period (Ta, Tb) which comprises the present time (Tp) as the determined time period; and
- selecting the dynamic code that is associated with the determined time period.

5. Method according to claim 4, wherein each of the dynamic codes is associated with an associated time-based token, wherein generating a time-based token based on the time-based token request comprises selecting a time-based token that is associated with the selected dynamic code; and/or
wherein the steps of receiving, determining, determining and selecting are executed on a processor of an Electronic Shelf Label (ESL), and preferably wherein the ESL forms the screen.

6. Method according to any one of the foregoing claims, wherein the dynamic code is a QR-code; and/or
the method further comprising setting the charging station in operation based on a payment confirmation.

7. Method according to any one of the foregoing claims, wherein the providing of the time-based token comprises:
- receiving a token request from a charging station;
- generating the time-based token based on the token request; and
- sending the time-based token to the charging station.

8. Method of operating a server for a charging station, comprising:
- providing a dynamic code;
- sending the dynamic code to the charging station, wherein the dynamic code is associated with charging station information relating to the charging station and is displayed on a screen of the charging station;
- receiving a charging station information request from an electronic device;
- sending the charging station information to the electronic device based on the charging station information request;
- receiving a time-based token request from the electronic device, wherein the time-based token request contains information from the dynamic code;
- providing a time-based token to the charging station based on the time-based token request that is to be displayed on the screen of the charging station;
- receiving a token confirmation request from the electronic device;
- comparing the token confirmation request with the time-based token, wherein the token confirmation request and the time-based token comprises at least one of a sequence of letters, a sequence of numbers, a sequence of number special characters and a sequence of a combination of letters, numbers, and special characters;
- sending, when the token confirmation request is identical to the time-based token, a confirmation signal to the charging station.

9. Charging station device, comprising:
- a screen;
- a processor operatively coupled to the screen, wherein the processor is configured to:
- output a dynamic code, wherein the dynamic code is associated with charging station information relating to the charging station; and
- receive a time-based token request from an electronic device, wherein the time-based token request contains information from the dynamic code, wherein the time-based token request is generated by a confirmation of a user on their electronic device after being shown the charging station information;
- generating a time-based token based on the time-based token request;
- displaying the time-based token on the screen of the charging station;
- receiving a token confirmation request from the electronic device into which the token confirmation request was inputted by the user;
- comparing the token confirmation request with the time-based token, wherein the token confirmation request and the time-based token comprises at least one of a sequence of letters, a sequence of numbers, a sequence of number special characters and a sequence of a combination of letters, numbers, and special characters; and
- displaying, when the token confirmation request is identical to the time-based token, a confirmation message on the screen of the charging station.

10. Charging station according to claim 9, wherein:
- the screen comprises an Electronic Shelf Label (ESL); and/or
- the dynamic code is a QR-code.

11. Charging station according to claim 9 or 10, wherein outputting the dynamic code comprises outputting a first dynamic code at a first time (T1), and changing the first dynamic code to a second dynamic code after a predetermined time duration after the first time (T1), and preferably wherein the predetermined time duration is in the range of 1-120 minutes, preferably in the range of 2-30 minutes, more preferably in the range of 3-10 minutes, most preferably in the range of 4-5 minutes.

12. Charging station according to any one of the foregoing claims 9 to **11,** wherein the generation of the time-based token comprises:
- selecting a dynamic code of a pre-generated list of dynamic codes.

13. Charging station according to claim 12, wherein each of the dynamic codes of the pre-generated list of dynamic codes is associated with a time period, and further comprising:
- determining the present time (Tp);
- determining the time period (Ta, Tb) which comprises the present time (Tp) as the determined time period; and
- selecting the dynamic code that is associated with the determined time period.

14. Charging station according to claim 13, wherein each of the dynamic codes is associated with an associated time-based token, wherein generating a time-based token based on the time-based token request comprises selecting a time-based token that is associated with the selected dynamic code; and/or
wherein the steps of receiving, determining, determining and selecting are executed on a processor of the Electronic Shelf Label (ESL).

15. Charging station according to any one of the foregoing claims 9 to **14,** further comprising the controller being configured to set the charging station in operation based on a payment confirmation.

## Patentansprüche

1. Verfahren zum Betreiben einer Ladestation, umfassend:
- Bereitstellen, durch einen Prozessor der Ladestation oder einen Prozessor eines Servers, eines dynamischen Codes;
- Anzeigen, durch den Prozessor der Ladestation, des dynamischen Codes auf einem Bildschirm der Ladestation, wobei der dynamische Code mit Ladestationsinformationen in Bezug auf die Ladestation verknüpft ist;
- Empfangen, durch den Prozessor der Ladestation oder den Prozessor des Servers, einer zeitbasierten Token-Anfrage von einer elektronischen Vorrichtung, wobei die zeitbasierte Token-Anfrage Informationen aus dem dynamischen Code enthält, wobei die zeitbasierte Token-Anfrage durch eine Bestätigung eines Benutzers auf der elektronischen Vorrichtung erzeugt wird, nachdem die Ladestationsinformationen angezeigt wurden;
- Erzeugen, durch den Prozessor der Ladestation oder den Prozessor des Servers, eines zeitbasierten Tokens basierend auf der zeitbasierten Token-Anfrage;
- Anzeigen des zeitbasierten Tokens auf dem Bildschirm der Ladestation;
- Eingeben einer Token-Bestätigungsanfrage durch einen Benutzer auf der elektronischen Vorrichtung, wobei die Token-Bestätigungsanfrage und das zeitbasierte Token mindestens eines von einer Folge von Buchstaben, einer Folge von Zahlen, einer Folge von Zahlen-Sonderzeichen und einer Folge einer Kombination von Buchstaben, Zahlen und Sonderzeichen umfasst;
- Senden der Token-Bestätigungsanfrage durch die elektronische Vorrichtung an die Ladestation oder den Server;
- Vergleichen, durch den Prozessor der Ladestation oder den Prozessor des Servers, der Token-Bestätigungsanfrage mit dem zeitbasierten Token; und
- Anzeigen einer Bestätigungsnachricht auf dem Bildschirm der Ladestation, wenn die Token-Bestätigungsanfrage mit dem zeitbasierten Token identisch ist.

2. Verfahren nach Anspruch 1, wobei das Bereitstellen des dynamischen Codes das Bereitstellen eines ersten dynamischen Codes zu einem ersten Zeitpunkt (T1) und ein Ändern des ersten dynamischen Codes zu einem zweiten dynamischen Code nach einer vorbestimmten Zeitdauer nach dem ersten Zeitpunkt (T1) umfasst; und vorzugsweise wobei die vorbestimmte Zeitdauer in dem Bereich von 1-120 Minuten liegt, vorzugsweise in dem Bereich von 2-30 Minuten, mehr bevorzugt in dem Bereich von 3-10 Minuten, am meisten bevorzugt in dem Bereich von 4-5 Minuten.

3. Verfahren nach einem der vorstehenden Ansprüche, wobei das Erzeugen des zeitbasierten Tokens ein Auswählen eines dynamischen Codes aus einer vorab erzeugten Liste von dynamischen Codes umfasst.

4. Verfahren nach Anspruch 3, wobei jeder der dynamischen Codes der vorab erzeugten Liste von dynamischen Codes mit einer Zeitspanne verknüpft ist, und ferner umfassend:
- Bestimmen des gegenwärtigen Zeitpunkts (Tp);
- Bestimmen der Zeitspanne (Ta, Tb), die den gegenwärtigen Zeitpunkt (Tp), als die bestimmte Zeitspanne umfasst; und
- Auswählen des dynamischen Codes, der mit der bestimmten Zeitspanne verknüpft ist.

5. Verfahren nach Anspruch 4, wobei jeder der dynamischen Codes mit einem verknüpften zeitbasierten Token verknüpft ist, wobei das Erzeugen eines zeitbasierten Tokens basierend auf der zeitbasierten Token-Anfrage das Auswählen eines zeitbasierten Tokens umfasst, der mit dem ausgewählten dynamischen Code verknüpft ist; und/oder
wobei die Schritte des Empfangens, Bestimmens, Bestimmens und Auswählens auf einem Prozessor eines elektronischen Regaletiketts (ESL) ausgeführt werden, und vorzugsweise wobei das ESL den Bildschirm bildet.

6. Verfahren nach einem der vorstehenden Ansprüche, wobei der dynamische Code ein QR-Code ist; und/oder
das Verfahren ferner ein Inbetriebsetzen der Ladestation basierend auf einer Zahlungsbestätigung umfasst.

7. Verfahren nach einem der vorstehenden Ansprüche, wobei das Bereitstellen des zeitbasierten Tokens umfasst:
- Empfangen einer Token-Anfrage von einer Ladestation;
- Erzeugen des zeitbasierten Tokens basierend auf der Token-Anfrage; und
- Senden des zeitbasierten Tokens an die Ladestation.

8. Verfahren zum Betreiben eines Servers für eine Ladestation, umfassend:
- Bereitstellen eines dynamischen Codes;
- Senden des dynamischen Codes an die Ladestation, wobei der dynamische Code mit Ladestationsinformationen in Bezug auf die Ladestation verknüpft ist und auf einem Bildschirm der Ladestation angezeigt wird;
- Empfangen einer Ladestationsinformationsanfrage von einer elektronischen Vorrichtung;
- Senden der Ladestationsinformationen an die elektronische Vorrichtung basierend auf der Ladestationsinformationsanfrage;
- Empfangen einer zeitbasierten Token-Anfrage von der elektronischen Vorrichtung, wobei die zeitbasierte Token-Anfrage Informationen aus dem dynamischen Code enthält;
- Bereitstellen eines zeitbasierten Tokens an die Ladestation basierend auf der zeitbasierten Token-Anfrage, die auf dem Bildschirm der Ladestation angezeigt werden soll;
- Empfangen einer Token-Bestätigungsanfrage von der elektronischen Vorrichtung;
- Vergleichen der Token-Bestätigungsanfrage mit dem zeitbasierten Token, wobei die Token-Bestätigungsanfrage und der zeitbasierte Token mindestens eines aus einer Folge von Buchstaben, einer Folge von Zahlen, einer Folge von Zahlen-Sonderzeichen und einer Folge einer Kombination von Buchstaben, Zahlen und Sonderzeichen umfasst;
- Senden, wenn die Token-Bestätigungsanfrage identisch mit dem zeitbasierten Token ist, eines Bestätigungssignals an die Ladestation.

9. Ladestationsvorrichtung, umfassend:
- einen Bildschirm;
- einen Prozessor, der mit dem Bildschirm funktionell gekoppelt ist, wobei der Prozessor konfiguriert ist zum:
- Ausgeben eines dynamischen Codes, wobei der dynamische Code mit Ladestationsinformationen in Bezug auf die Ladestation verknüpft ist; und
- Empfangen einer zeitbasierten Token-Anfrage von einer elektronischen Vorrichtung, wobei die zeitbasierte Token-Anfrage Informationen aus dem dynamischen Code enthält, wobei die zeitbasierte Token-Anfrage durch eine Bestätigung eines Benutzers auf seiner elektronischen Vorrichtung erzeugt wird, nachdem ihm die Ladestationsinformationen angezeigt wurden;
- Erzeugen eines zeitbasierten Tokens basierend auf der zeitbasierten Token-Anfrage;
- Anzeigen des zeitbasierten Tokens auf dem Bildschirm der Ladestation;
- Empfangen einer Token-Bestätigungsanfrage von der elektronischen Vorrichtung, in die die Token-Bestätigungsanfrage durch den Benutzer eingegeben wurde;
- Vergleichen der Token-Bestätigungsanfrage mit dem zeitbasierten Token, wobei die Token-Bestätigungsanfrage und der zeitbasierte Token mindestens eines aus einer Folge von Buchstaben, einer Folge von Zahlen, einer Folge von Zahlen-Sonderzeichen und einer Folge einer Kombination von Buchstaben, Zahlen und Sonderzeichen umfasst; und
- Anzeigen einer Bestätigungsnachricht auf dem Bildschirm der Ladestation, wenn die Token-Bestätigungsanfrage mit dem zeitbasierten Token identisch ist.

10. Ladestation nach Anspruch 9, wobei:
- der Bildschirm ein elektronisches Regaletikett (ESL) umfasst; und/oder
- der dynamische Code ein QR-Code ist,

11. Ladestation nach Anspruch 9 oder 10, wobei das Ausgeben des dynamischen Codes das Ausgeben eines ersten dynamischen Codes zu einem ersten Zeitpunkt (T1), und das Ändern des ersten dynamischen Codes zu einem zweiten dynamischen Code nach einer vorbestimmten Zeitdauer nach dem ersten Zeitpunkt (T1) umfasst, und vorzugsweise wobei die vorbestimmte Zeitdauer in dem Bereich von 1-120 Minuten liegt, vorzugsweise in dem Bereich von 2-30 Minuten, mehr bevorzugt in dem Bereich von 3-10 Minuten, am meisten bevorzugt in dem Bereich von 4-5 Minuten.

12. Ladestation nach einem der vorstehenden Ansprüche 9 bis 11, wobei die Erzeugung des zeitbasierten Tokens umfasst:
- Auswählen eines dynamischen Codes aus einer vorab erzeugten Liste von dynamischen Codes.

13. Ladestation nach Anspruch 12, wobei jeder der dynamischen Codes der vorab erzeugten Liste von dynamischen Codes mit einer Zeitspanne verknüpft ist, und ferner umfassend:
- Bestimmen des gegenwärtigen Zeitpunkts (Tp);
- Bestimmen der Zeitspanne (Ta, Tb), die den gegenwärtigen Zeitpunkt (Tp), als die bestimmte Zeitspanne umfasst; und
- Auswählen des dynamischen Codes, der mit der bestimmten Zeitspanne verknüpft ist.

14. Ladestation nach Anspruch 13, wobei jeder der dynamischen Codes mit einem verknüpften zeitbasierten Token verknüpft ist, wobei das Erzeugen eines zeitbasierten Tokens basierend auf der zeitbasierten Token-Anfrage das Auswählen eines zeitbasierten Tokens umfasst, der mit dem ausgewählten dynamischen Code verknüpft ist; und/oder
wobei die Schritte des Empfangens, Bestimmens, Bestimmens und Auswählens auf einem Prozessor des elektronischen Regaletiketts (ESL) ausgeführt werden.

15. Ladestation nach einem der vorstehenden Ansprüche 9 bis 14, ferner umfassend die Steuerung, die konfiguriert ist, um die Ladestation basierend auf einer Zahlungsbestätigung in Betrieb zu setzen.

## Revendications

1. Procédé permettant de faire fonctionner une borne de recharge, comprenant :
- la fourniture, par un processeur de la borne de recharge ou un processeur d'un serveur, d'un code dynamique ;
- l'affichage, par le processeur de la borne de recharge, du code dynamique sur un écran de la borne de recharge, dans lequel le code dynamique est associé à des informations de borne de recharge relatives à la borne de recharge ;
- la réception, par le processeur de la borne de recharge ou le processeur du serveur, d'une demande de jeton basé sur le temps en provenance d'un dispositif électronique, dans lequel la demande de jeton basé sur le temps contient des informations provenant du code dynamique, dans lequel la demande de jeton basé sur le temps est générée par une confirmation d'un utilisateur sur le dispositif électronique après avoir vu les informations de borne de recharge ;
- la génération, par le processeur de la borne de recharge ou le processeur du serveur, d'un jeton basé sur le temps sur la base de la demande de jeton basé sur le temps ;
- l'affichage du jeton basé sur le temps sur l'écran de la borne de recharge ;
- l'entrée d'une demande de confirmation de jeton par un utilisateur sur le dispositif électronique, dans lequel la demande de confirmation de jeton et le jeton basé sur le temps comprennent au moins l'une parmi une séquence de lettres, une séquence de chiffres, une séquence de caractères spéciaux numériques et une séquence d'une combinaison de lettres, de chiffres et de caractères spéciaux ;
- l'envoi, par le dispositif électronique à la borne de recharge ou au serveur, de la demande de confirmation de jeton ;
- la comparaison, par le processeur de la borne de recharge ou le processeur du serveur, de la demande de confirmation de jeton avec le jeton basé sur le temps ; et
- l'affichage, lorsque la demande de confirmation de jeton est identique au jeton basé sur le temps, d'un message de confirmation sur l'écran de la borne de recharge.

2. Procédé selon la revendication 1, dans lequel la fourniture du code dynamique comprend la fourniture d'un premier code dynamique à un premier instant (T1), et le changement du premier code dynamique en un second code dynamique après une durée prédéterminée après le premier instant (T1) ; et de préférence dans lequel la durée prédéterminée est située dans la plage allant de 1 à 120 minutes, de préférence dans la plage allant de 2 à 30 minutes, plus préférablement dans la plage allant de 3 à 10 minutes, le plus préférablement dans la plage allant de 4 à 5 minutes.

3. Procédé selon l'une quelconque des revendications précédentes, dans lequel la génération du jeton basé sur le temps comprend la sélection d'un code dynamique d'une liste prégénérée de codes dynamiques.

4. Procédé selon la revendication 3, dans lequel chacun des codes dynamiques de la liste prégénérée de codes dynamiques est associé à une période de temps, et comprenant en outre :
- la détermination de l'instant présent (Tp) ;
- la détermination de la période de temps (Ta, Tb) qui comprend l'instant présent (Tp) comme période de temps déterminée ; et
- la sélection du code dynamique qui est associé à la période de temps déterminée.

5. Procédé selon la revendication 4, dans lequel chacun des codes dynamiques est associé à un jeton basé sur le temps associé, dans lequel la génération d'un jeton basé sur le temps sur la base de la demande de jeton basé sur le temps comprend la sélection d'un jeton basé sur le temps qui est associé au code dynamique sélectionné ; et/ou
dans lequel les étapes de réception, de détermination, de détermination et de sélection sont exécutées sur un processeur d'une étiquette électronique de gondole (ESL), et de préférence dans lequel l'ESL forme l'écran.

6. Procédé selon l'une quelconque des revendications précédentes, dans lequel le code dynamique est un code 2D ; et/ou
le procédé comprenant en outre la mise en fonctionnement de la borne de recharge sur la base d'une confirmation de paiement.

7. Procédé selon l'une quelconque des revendications précédentes, dans lequel la fourniture du jeton basé sur le temps comprend :
- la réception d'une demande de jeton en provenance d'une borne de recharge ;
- la génération du jeton basé sur le temps sur la base de la demande de jeton ; et
- l'envoi du jeton basé sur le temps à la borne de recharge.

8. Procédé permettant de faire fonctionner un serveur pour une borne de recharge, comprenant :
- la fourniture d'un code dynamique ;
- l'envoi du code dynamique à la borne de recharge, dans lequel le code dynamique est associé à des informations de borne de recharge relatives à la borne de recharge et est affiché sur un écran de la borne de recharge ;
- la réception d'une demande d'informations de borne de recharge en provenance d'un dispositif électronique ;
- l'envoi des informations de borne de recharge au dispositif électronique sur la base de la demande d'informations de borne de recharge ;
- la réception d'une demande de jeton basé sur le temps en provenance du dispositif électronique, dans lequel la demande de jeton basé sur le temps contient des informations provenant du code dynamique ;
- la fourniture d'un jeton basé sur le temps à la borne de recharge sur la base de la demande de jeton basé sur le temps qui doit être affiché sur l'écran de la borne de recharge ;
- la réception d'une demande de confirmation de jeton en provenance du dispositif électronique ;
- la comparaison de la demande de confirmation de jeton avec le jeton basé sur le temps, dans lequel la demande de confirmation de jeton et le jeton basé sur le temps comprennent au moins l'une parmi une séquence de lettres, une séquence de chiffres, une séquence de caractères spéciaux numériques et une séquence d'une combinaison de lettres, de chiffres et de caractères spéciaux ;
- l'envoi, lorsque la demande de confirmation de jeton est identique au jeton basé sur le temps, d'un signal de confirmation à la borne de recharge.

9. Dispositif formant borne de recharge, comprenant :
- un écran ;
- un processeur couplé de manière fonctionnelle à l'écran, dans lequel le processeur est configuré pour :
- délivrer en sortie un code dynamique, dans lequel le code dynamique est associé à des informations de borne de recharge relatives à la borne de recharge ; et
- recevoir une demande de jeton basé sur le temps en provenance d'un dispositif électronique, dans lequel la demande de jeton basé sur le temps contient des informations provenant du code dynamique, dans lequel la demande de jeton basé sur le temps est générée par une confirmation d'un utilisateur sur son dispositif électronique après avoir vu les informations de borne de recharge ;
- générer un jeton basé sur le temps sur la base de la demande de jeton basé sur le temps ;
- afficher le jeton basé sur le temps sur l'écran de la borne de recharge ;
- recevoir une demande de confirmation de jeton en provenance du dispositif électronique dans lequel la demande de confirmation de jeton a été entrée par l'utilisateur ;
- comparer la demande de confirmation de jeton avec le jeton basé sur le temps, dans lequel la demande de confirmation de jeton et le jeton basé sur le temps comprennent au moins l'une parmi une séquence de lettres, une séquence de chiffres, une séquence de caractères spéciaux numériques et une séquence d'une combinaison de lettres, de chiffres et de caractères spéciaux ; et
- afficher, lorsque la demande de confirmation de jeton est identique au jeton basé sur le temps, un message de confirmation sur l'écran de la borne de recharge.

10. Borne de recharge selon la revendication 9, dans laquelle ;
- l'écran comprend une étiquette électronique de gondole (ESL) ; et/ou
- le code dynamique est un code 2D.

11. Borne de recharge selon la revendication 9 ou 10, dans laquelle la sortie du code dynamique comprend la sortie d'un premier code dynamique à un premier instant (T1), et le changement du premier code dynamique en un second code dynamique après une durée prédéterminée après le premier instant (T1), et de préférence dans laquelle la durée prédéterminée est située dans la plage allant de 1 à 120 minutes, de préférence dans la plage allant de 2 à 30 minutes, plus préférablement dans la plage allant de 3 à 10 minutes, le plus préférablement dans la plage allant de 4 à 5 minutes.

12. Borne de recharge selon l'une quelconque des revendications 9 à 11 précédentes, dans laquelle la génération du jeton basé sur le temps comprend :
- la sélection d'un code dynamique d'une liste prégénérée de codes dynamiques.

13. Borne de recharge selon la revendication 12, dans laquelle chacun des codes dynamiques de la liste prégénérée de codes dynamiques est associé à une période de temps, et comprenant en outre :
- la détermination de l'instant présent (Tp) ;
- la détermination de la période de temps (Ta, Tb) qui comprend l'instant présent (Tp) comme période de temps déterminée ; et
- la sélection du code dynamique associé à la période de temps déterminée.

14. Borne de recharge selon la revendication 13, dans laquelle chacun des codes dynamiques est associé à un jeton basé sur le temps associé, dans laquelle la génération d'un jeton basé sur le temps sur la base de la demande de jeton basé sur le temps comprend la sélection d'un jeton basé sur le temps qui est associé au code dynamique sélectionné ; et/ou
dans lequel les étapes de réception, de détermination, de détermination et de sélection sont exécutées sur un processeur de l'étiquette électronique de gondole (ESL).

15. Borne de recharge selon l'une quelconque des revendications 9 à 14 précédentes, comprenant en outre le fait que la commande est configurée pour mettre la borne de recharge en fonctionnement sur la base d'une confirmation de paiement.
